# EUROPEAN PATENT APPLICATION

(11) **EP 1 223 531 A1**
(43) Date of publication of application: **17.07.2002**
(21) Application number: 02396001.6
(22) Date of filing: 09.01.2002
(51) Int. Cl.: G06F 17/60

(54) **Method and arrangement for ordering a product or service**

(30) Priority: 11.01.2001 FI 20010063
(71) Applicant: Suomen Posti Oy, 00100 Helsinki (FI)
(72) Inventor: Spets, Jouni, 00780 Helsinki (FI)
(74) Representative: Kupiainen, Juhani Kalervo

(57) **Abstract**

The invention relates to a method (200) and system (300) for ordering a product or service. In particular the invention relates to the technology of communicating an order code (304) from a customer (302) to a vendor. An idea of the invention is that customer data are recorded in an intermediary's system (310), for example. When ordering a product or service in accordance with the method of the invention, at least one order code (304) is input on the customer's terminal (306), which code is then sent to the intermediary's system (310). According to an idea of the invention, the customer is identified and customer data are read using the intermediary's system (310). After that, the order code (304) sent by the customer and at least part of the customer data are forwarded to at least one vendor (314) through the inter-mediary's information system (310).

## Description

The invention relates to a method and system for ordering a product or service. In particular the invention relates to the technology of communicating an order code from a customer to a vendor.

Nowadays consumers are presented a multitude of products and advertisements of various kinds. Products are being advertised traditionally on TV, in newspapers and magazines, on the Internet, on special advertising leaflets, and in mail-order catalogs.

A problem with methods like those mentioned above is that the purchasing or ordering event is limited to a certain time or place. Moreover, ordering is often considered laborious and even difficult. For example, in a mail-order type method purchasers have to fill out and send ordering forms or call congested service numbers. When ordering from TV shopping channels one has to write down product information and order line numbers and then make the order by calling the service number. Furthermore, it has been found that the majority (about 80%) of those who write down the phone number will never order the product and about a fifth of those who have contemplated ordering or buying a product will actually go through the trouble that the ordering takes.

As for buying from the Internet, it requires a computer and an Internet account so that this method of ordering is place-limited. Moreover, not everybody has an opportunity to use the Internet at home. Furthermore, buying is often not easy, as one has to know how to find the desired products in a great mass of information.

Attempts have been made to circumvent problems like those mentioned above e.g. by using solutions employing various auxiliary means like a bar code reader, for instance. Publication EP 1 016 999 A2 discloses a solution utilizing a bar code reader attached to a wireless telephone. In order to use the bar code reader a customer first downloads to his wireless telephone a special purchase transaction program to be used for the purchasing event. The solution also involves the delivery of special advertising leaflets or product catalogs to the customers, which leaflets or catalogs contain bar codes for the products. The bar codes can be read by means of the bar code reader attached to the phone so that the information read from the bar code in connection with a purchase is sent to the vendor's system.

A problem with a solution like the one described above is that the purchase transaction program depends on the vendor and the model or type of the phone so that a separate program has to be downloaded for each different vendor or for each different phone model or type. Moreover, the solution requires that the wireless telephone in question must be equipped with appropriate memory units and processor to download and execute the purchase transaction program. The wireless telephone also needs to have the means to use the bar code reader attached thereto. In addition, the system according to the solution is awkward to use because of the bar code reader and also because a product catalog with bar codes is needed for the purchase. A further problem is that the customer does not know whether or not his order was received, whether or not the product or service is available or when it will be delivered to him.

An object of the invention is to provide a solution for ordering a product or service, which solution will alleviate the above-mentioned disadvantages associated with the prior art. The invention aims to solve the problem of how to order a product or service easily by means of a purchasing or ordering method independent of time and place. Another object of the invention is to make advertising easier and to facilitate the generation of orders direct from advertising.

The objects of the invention are achieved when an order code which has been provided in an advertisement or elsewhere and which identifies a product or service and/or the vendor, is input on a customer's terminal and transmitted to an intermediary who identifies the customer on the basis of the ID code of his terminal and forwards the order code to the vendor. The intermediary may also send to the vendor information recorded about the customer, such as his name and address. Advantageously a confirmation of order or a message concerning the availability of the product or service is sent to the customer.

A method according to the invention for ordering a product or service is characterized in that the method comprises steps in which
- customer data are recorded,
- at least one order code is input on a customer's terminal and said code is transmitted to an intermediary's system,
- said order code or corresponding information is forwarded to at least one vendor,
- the order code is received and saved, and
- the customer is identified and the customer data are read.

A system according to the invention for ordering a product or service is characterized in that the system comprises
- a means for recording customer data,
- a means for inputting at least one order code on a customer's terminal and a means for transmitting said code to an intermediary's system,
- a means for forwarding said order code or corresponding information to at least one vendor,
- a means for receiving and saving the order code, and
- a means for identifying the customer and reading the customer data.

Some advantageous embodiments of the invention are specified in the dependent claims.

The invention has considerable advantages over solutions according to the prior art. The method according to the invention facilitates an easy and quick method for ordering and buying products or services independent of the time and place. In addition, the method according to the invention is very general in nature and not restricted to any one type of terminal arrangement.

In the simplest case, a customer just sends an order code to an intermediary's information system to order a product or service. In the method according to the invention all orders go into one and the same information system so that the customer need not remember several service numbers even if he was ordering products from different vendors. Furthermore, the method of ordering is safe for the customer as he receives a confirmation on the basis of which he knows that the order was appropriately processed and he will receive the product or service in a certain time.

As for the vendor, the method according to the invention facilitates the placement of orders direct from advertisements, whereby advertising will become more cost-effective. Moreover, adding order codes to advertisements is inexpensive and simple, and one and the same order code can be used for a given product in several different media. Furthermore, as orders come in standard format as text messages, WAP messages or via the Internet or digital TV to the intermediary's and subsequently the vendor's information system, the reception of orders is quick and efficient.

Terms used in this patent application include:
- "Customer" is the party that orders a product or service.
- "Vendor" is the party that exposes products or services for sale.
- "Information system" may be maintained e.g. by an intermediary or vendor and is used to receive an order, identify the customer, forward the order, contact the vendor's stock control system in order to verify the availability of the product or service ordered, sends to the customer a confirmation of order, manages databases of registered users or customers as well as product or service order codes, and, if necessary, sends an inquiry to the customer so that the customer can provide the basic information required.
- "Order code" is a product-specific and/or vendor-specific identifier consisting of e.g. letters and numbers or other intelligible characters (for instance, HH123) given to the vendor by an intermediary acting as a third party. In particular, the order code is such that it can be transmitted as a text message in a mobile communications system. Additionally, the order code is such that it can be communicated in the form of an electronic message such as e-mail or other such message using the Internet, a WAP (Wireless Application Protocol) device, a PDA (Personal Digital Assistant) or digital TV.
- "Intermediary" is a third party that allocates an order code to the vendor, receives orders from customers as well as forwards the orders to the vendors and is responsible for the operation of the information system and the whole method.

Some advantageous embodiments of the invention will now be explained a little more closely with reference to the accompanying drawings in which
- Fig. 1: shows a flow diagram of an embodiment according to the invention for marketing a product or service using an order code,
- Fig. 2: shows a flow diagram of an embodiment according to the invention for ordering a product or service using an order code, and
- Fig. 3: shows a system according to an embodiment of the invention for ordering and delivering a product or service.

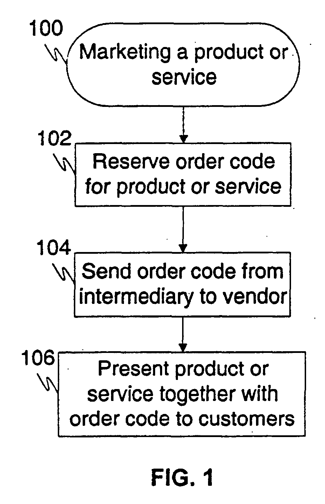

Fig. 1 shows a flow diagram of an embodiment according to the invention for presenting and/or marketing 100 a product or service using an order code. The idea of the method is that a vendor who wants to utilize the order code based method makes a contract with an intermediary. At this point the intermediary may record vendor-specific information in the intermediary's information system, for example. The vendor-specific information may comprise e.g. the name of the vendor or store, address information such as the street address, e-mail address, web address, as well as a telephone number and information about the order codes to be allocated to the vendor. Moreover, information about a vendor's product or service corresponding to a particular order code may be stored in the intermediary's system.

In step 102 an order code is or order codes are generated and reserved for the vendor and/or the vendor's products or services, and in step 104 the codes are delivered to the vendor. An order code typically is product and vendor specific and may constitute e.g. a short identifier consisting of letters and numbers or other intelligible characters, such as HH123, for example. Having received the codes the vendor can add them to products and services advertised, and advertise and market them in step 106 through different advertising media. An advertisement may now advantageously include an order code unambiguously associated with the advertised or marketed product or service and/or the vendor thereof. The advertising channel may be a traditional channel such as the radio, TV, newspapers and magazines and special advertising leaflets and outdoor advertising means. In addition, a product or service including an order code may be advertised on the Internet, digital TV, by e-mail, or, alternatively, the advertisement may be sent to a customer's portable terminal such as mobile communication device, for example.

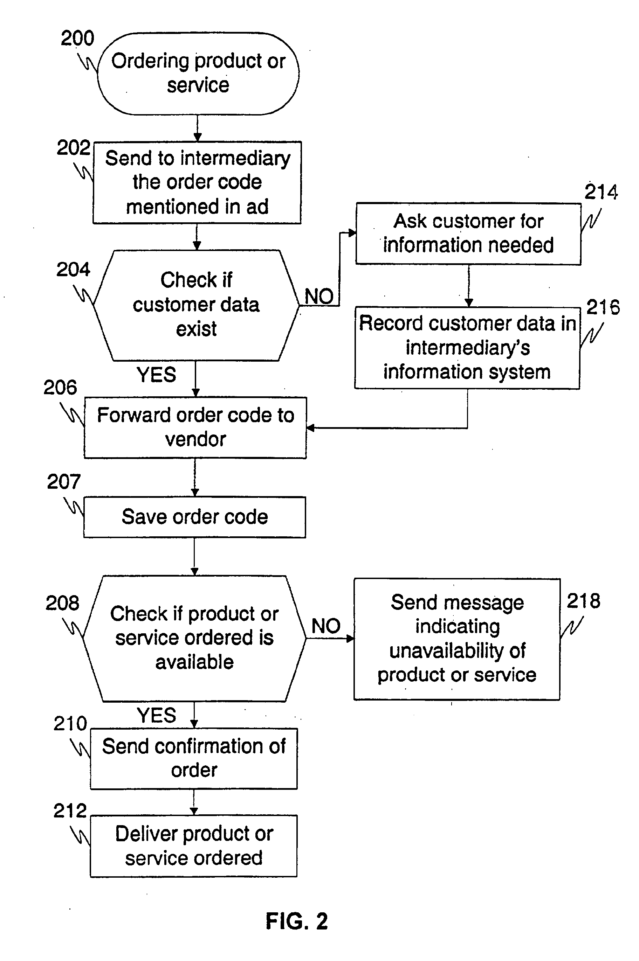

Fig. 2 shows a flow diagram of an embodiment according to the invention for ordering 200 a product or service using an order code. When a customer has seen, heard or otherwise learned of an advertisement for a product or service or an order code associated therewith, he may in step 202 order the product or service by entering the code on his terminal and sending it to an intermediary's system. According to an advantageous embodiment, the order code of a product or service advertised can be sent. e.g. in connection with an advertisement, direct to the cus-tomer's terminal so that the customer can order the product by replying to the message he received. The terminal may be a terminal identifiable through a certain identification code, such as e.g. a computer connected to a network, a PDA device, digital TV or a device utilizing a WAP-based service. In particular the terminal may be a mobile communication device such as a mobile phone.

In step 204 the intermediary can identify the customer e.g. on the basis of the identification code of the latter's terminal and check up the customer data in the intermediary's information system. The identifier of the terminal may be e.g. a mobile phone number or some other code identifying the user or the terminal. The identifier may also be e.g. a user ID such as those used in computer networks, which may be supplemented with a password. If necessary, the intermediary may generate for the customer such user or customer ID which can be protected with a password. In that case the customer may log into the intermediary's information system before making the order; this can be accomplished e.g. via a network and by entering the customer ID and password. The intermediary can then identify the customer on the basis of the user or customer ID and the customer data corresponding to the ID.

If customer data do not exist or are not found, the customer may be sent a request for providing the necessary information, step 214. The request may include various questions concerning the customer, e.g. questions about the name and address of the customer. In addition, the request may include questions concerning the customer's terminal, e.g. questions about the type or identification code of the terminal. Alternatively, the customer may send such information without a special request or even in connection with an order. This can be done e.g. when a customer has not used the service before or when the customer's data have been changed and the current data are incorrect. Furthermore, it may be possible for a customer to send to the intermediary an inquiry concerning the customer data so that a message may be sent from the intermediary's system to the customer about the current customer data. The customer data may be stored in the intermediary's information system in step 216, and in step 206 the order code sent by the customer may be forwarded to the vendor of the product or service. In step 206 it is possible to send at least part of the customer data to the vendor's system. The order code and possibly other data related to the transaction can be recorded in step 207 in the system of either the vendor or the intermediary or both.

If the customer has used the service before or his data exist in the intermediary's information system, e.g. associated with the customer's terminal ID or customer ID, the order can be made by entering the order code on the customer's terminal and sending the code to the intermediary's information system. In that case the order request can be forwarded direct from the intermediary's information system to the vendor's system in step 206. The order request advantageously includes the order code of the product or service and at least part of the customer data. For instance, the customer's name, address and/or telephone number may be transmitted. The order request may further include an identifier with which the customer can be associated with the products or services ordered.

Having received the order the vendor's system can save it and in step 208 verify quickly and easily e.g. the availability of the product or service corresponding to the order code in the order request. There may also be a register or a counter in the intermediary's system for the vendor's products or services, whereby the availability of the product or service can be verified using the intermediary's system. If the product or service is available, a confirmation of order can be sent to the customer in step 210. The confirmation of order may include information about the product, price, delivery time and delivery address, for example. If the product or service is not available, a message indicating that can be sent to the customer in step 218. The information systems of the intermediary and vendor may be advantageously arranged in such a manner that the confirmation of order or the availability information for the product or service corresponding to the order code can be sent automatically from the vendor's system to the intermediary's system. The intermediary's system can recognize the customer's or his terminal's ID in the message and send the message further to the terminal of the customer who made the order.

In step 212 the product or service ordered is delivered to the customer e.g. according to the customer's address information recorded in a database. Payment for the product or service can be made using known methods such as C.O.D. (Collect on Delivery) or through the Internet or alternatively in such a manner that the expenses are first entered in the intermediary's register and then added to the fees of the customer's terminal e.g. in his phone bill.

Alternatively, also the vendor's information system may contain the customer data and the ID for the customer's terminal so that the vendor can identify the customer on the basis of the terminal ID and customer data. In that case the intermediary need not send or even maintain customer data but only transmit the order code sent by the customer and the customer's terminal ID to the vendor associated with the order code.

In one embodiment the customer data can be concealed from the vendor so that the vendor is only sent the order code and possibly a second code from the intermediary's system. The purpose of the second code is to identify the customer associated with the order. In this embodiment the vendor may send the product or service corresponding to the order code, as well as the second code associated with the order, to the intermediary, whereby the intermediary can use the second code to link the product associated with the order code to the customer who ordered the product.

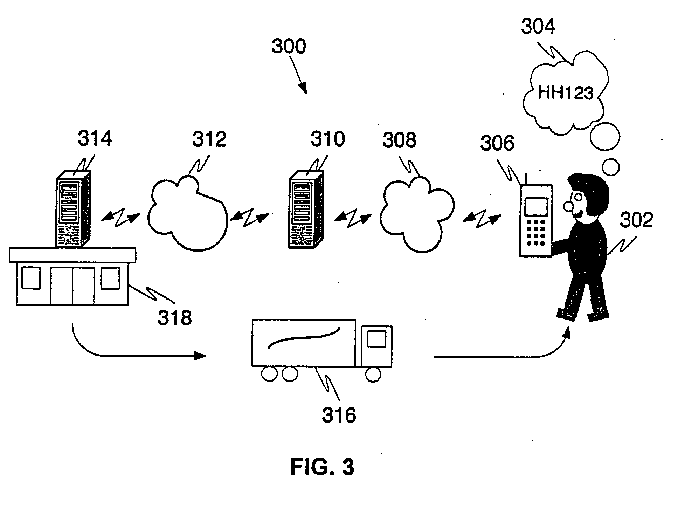

Fig. 3 shows an arrangement 300 according to an embodiment of the invention for ordering a product or service and delivering the order to the customer 302. In the method according to this embodiment the customer 302 can enter the order code 304 for a product or service on his terminal 306 and send it via a communications network 308, for example, to an intermediary's system 310. The terminal 306 may be e.g. a computer that can be connected to a communications network, digital TV, a device utilizing a WAP-based service or a PDA. Advantageously the terminal may be a wireless mobile terminal such as mobile phone, for example. Similarly the communications network 308 may be a communications network corresponding to the terminal, such as a mobile telephone network corresponding to the mobile phone.

The terminal 306 typically comprises a means for establishing a connection with a communications network 308 and means for inputting an order code 304 and transmitting it to the intermediary's system via the communications network 308. The terminal may also comprise a means for sending and receiving requests concerning customer data as well as means for receiving a confirmation of order and/or information concerning the availability of a product or service. In addition, the terminal may comprise a means for sending an identification of the terminal, such as a phone number, for example. The identifying information can advantageously be sent in connection with the order code. The terminal may also comprise a means for inputting and transmitting a user or customer ID and a password possibly associated therewith.

The intermediary's system 310 typically comprises a means for saving the customer 302 data, means for identifying the customer on the basis of the identification of the customer's terminal 306, for example, and a means for reading the customer data and usually also a means for identifying the customer on the basis of the customer data. The system 310 generally also comprises a means for reading an order code 304 and associating it unambiguously with a vendor providing a product or service or with the vendor's system 314. The intermediary's system 310 may also comprise a means for reading an order code 304 and associating it unambiguously with a vendor's product or service corresponding to the order code as well as a means for saving the order code. The system 310 typically also comprises a means for delivering the order code 304 and at least part of the customer data to the vendor's system 314 via a communications network 312 as well as a means for establishing a connection with the communications network 312.

Moreover, the intermediary's system 310 may comprise a means for sending inquiries concerning the availability of the product or service associated with the order code 304 or other inquiries to the vendor's system 314 as well as a means for receiving replies to the inquiries. The intermediary's system 310 may also comprise a means for monitoring the availability of products or services provided by a vendor, e.g. a register indicating the quantity of products in stock. The system 310 may also comprise a means for sending a request for customer data and means for delivering a confirmation of order and/or product availability information to the customer's 302 terminal 306.

The vendor's system 314 typically comprises a means for establishing a connection with a communications network 312 and receiving an order request, means for extracting an order code 304 and customer data from the order request as well as a means for reading the order code 304 and associating it unambiguously with a certain product or service and saving the order code. The vendor's system 314 usually also comprises a means for verifying the availability of the product or service e.g. in the vendor's stock 318 and for transmitting a confirmation of order and/or availability information to the intermediary's system 310. Verification of the availability of a product or service may be realized automatically e.g. using the vendor's system 314 and the order code 304.

The vendor's system may also comprise a means for preparing the product or service for shipment and a means for sending a notice e.g. to the system of a party providing transport services, indicating that the shipment is ready. The party providing transport services typically has a means 316 for delivering the shipment to the customer 302. Alternatively the product or service ordered by the customer may be delivered electrically, e.g. via communications networks, direct to the customer's terminal, in which case the product or service can be sent from the vendor's system 314 to the customer's terminal 306 via the intermediary's system 310. Alternatively the product or service may be sent direct to the customer's terminal 306, or an address may be sent to the customer's terminal indicating the place where the product or service can be fetched from. In that case the customer himself may fetch the product or service at the address indicated, using his terminal such as mobile communication device or computer, for example.

Alternatively, also the vendor's information system may comprise a means for reading customer data and the identification of the customer's terminal as well as a means for identifying the customer on the basis of said data.

Above it was described only a few embodiments of the solution according to the invention. The principle according to the invention is naturally modifiable within the scope defined by the claims as regards implementation details and fields of application, for example. In particular, the terminal used by the customer may constitute any type of system with which the idea according to the invention can be used or applied.

Furthermore, it should be noted that one and the same customer can use the method according to the invention by means of several different terminals and that the same customer and/or his customer data can be identified through the identification codes of the several different terminals used by the customer. Thus the implementation of the method according to the invention is not limited only to one terminal of a customer or to an apparatus using one method of communication only, say solely to a mobile phone or solely to the Internet.

## Claims

1. A method (200) for ordering a product or service, **characterized in that** the method comprises steps in which
- customer data are recorded (216),
- at least one order code (304) is input on a customer's terminal (306) and said code is transmitted (202) to an intermediary's system (310),
- said order code or corresponding information is forwarded (206) to at least one vendor (314),
- the order code is received and saved (207), and
- the customer is identified and the customer data are read (204).

2. A method according to claim 1, **characterized in that** said intermediary (310) reserves for said vendor the right to use said order code (304) in the intermediary's system.

3. A method according to claim 1 or 2, **characterized in that** said order code (304) can be linked to at least one product and/or at least one vendor (314).

4. A method according to claim 1, 2 or 3, **characterized in that** said order code (304) is delivered in a text message in a mobile communications system.

5. A method according to claim 1, 2 or 3, **characterized in that** said order code (304) is delivered in a message in a digital TV system.

6. A method according to claim 1, **characterized in that** said customer (302) is identified on the basis of an identification code of the customer's terminal (306).

7. A method according to claim 1, **characterized in that** said customer (302) is identified on the basis of said customer data.

8. A method according to claim 1, **characterized in that** said customer data comprise the customer's name, address and/or identification code of the customer's terminal (306).

9. A method according to claim 1, **characterized in that** an inquiry for customer data is sent to the customer's terminal (306) through the intermediary's system (310).

10. A method according to claim 1, **characterized in that** the customer data are recorded (216) in the intermediary's system (310).

11. A method according to claim 1, **characterized in that** the ayailability of the product or service corresponding to said order code (304) is verified (208) in the vendor's system (314) and/or in the intermediary's system (310).

12. A method according to claim 1, **characterized in that** the transaction corresponding to the order is confirmed by the vendor.

13. A method according to claim 1, **characterized in that** a confirmation of order and/or information about the availability of the product or service is sent (210) to the customer's terminal (306).

14. A method according to claim 13, **characterized in that** the confirmation of order comprises information about the product ordered, delivery address and/or delivery time.

15. A system (300) for ordering a product or service, **characterized in that** the system comprises
- a means for recording customer (302) data,
- a means for inputting at least one order code (304) on a customer's terminal (306) and a means for transmitting said code to an intermediary's system (310),
- a means for forwarding said order code or corresponding information to at least one vendor (314),
- a means for receiving and saving the order code, and
- a means for identifying the customer and reading the customer data.

16. A system according to claim 15, **characterized in that** said terminal (306) is a wireless mobile phone.

17. A system according to claim 15, **characterized in that** said terminal (306) is a computer that can be connected to a communications network.

18. A system according to claim 15, **characterized in that** said terminal (306) is a digital TV.

19. A system according to claim 15, **characterized in that** said terminal (306) is a terminal utilizing a WAP service.

20. A system according to claim 15. **characterized in that** it comprises a means for linking said order code (304) to at least one product and/or at least one vendor (314).

21. A system according to claim 15, **characterized in that** it comprises a means for identifying said customer (302) on the basis of an identification code of the customer's terminal (306).

22. A system according to claim 15, **characterized in that** it comprises a means for identifying said customer (302) on the basis of said customer data.

23. A system according to claim 15, **characterized in that** it comprises a means for sending an inquiry for customer data to the customer's terminal (306) through the intermediary's system (310).

24. A system according to claim 15. **characterized in that** it comprises a means for recording customer (302) data in the intermediary's system (310).

25. A system according to claim 15, **characterized in that** it comprises a means for verifying the availability of the product or service corresponding to said order code (304) through the vendor's system (314) and/or the intermediary's system (310).

26. A system according to claim 15, **characterized in that** it comprises a means for sending a confirmation of order and/or information about the availability of the product or service to the customer's terminal (306) through the intermediary.
